# EUROPÄISCHE PATENTANMELDUNG

(11) **EP 4 670 958 A1**
(43) Veröffentlichungstag der Anmeldung: **31.12.2025**
(21) Anmeldenummer: 25174832.3
(22) Anmeldetag: 07.05.2025
(51) Int. Cl.: B32B 5/02, B32B 7/12, B32B 15/08, B32B 27/30, B32B 27/32, B32B 27/34, B32B 27/36, B32B 29/00, C09J 7/20, C09J 7/30, B32B 27/40, C09J 7/29, E04B 1/66

(54) **ABDICHTUNGSELEMENT ZUR BAUWERKSABDICHTUNG**

(30) Priorität: 28.06.2024 DE 102024118398
(71) Anmelder: an.kox GmbH, 72108 Rottenburg am Neckar (DE)
(72) Erfinder:
(74) Vertreter: Mammel und Maser Patentanwälte PartG mbB

(57) **Zusammenfassung**

Die Erfindung betrifft ein Abdichtungselement (10) zur Bauwerksabdichtung, umfassend eine dehnbare Klebeschicht (11), wobei auf der Klebeschicht (11) eine Betonkontaktschicht (12) umfassend Polyurethane, oder Polyurethan-Copolymere aufgebracht ist, wobei die Betonkontaktschicht (12) eine temporär stabile Schicht ist und die Bruchkraft der Betonkontaktschicht (12) nach Lagerung in einer wässrigen 0,1 M NaHCO₃-Lösung über eine Zeitdauer von sieben Tagen bei 23 °C wenigstens auf 20 %, vorzugsweise wenigstens auf 10 % und besonders bevorzugt wenigstens auf 5 % im Vergleich zu der Bruchkraft der Betonkontaktschicht ohne Lagerung reduziert ist.

## Beschreibung

Die vorliegende Erfindung betrifft ein flächiges Abdichtungselement zur Bauwerksabdichtung, das insbesondere im Hoch-, Tief-, Ingenieur-, Tunnel-, Straßen- und Wasserbau für die Abdichtung und den Schutz von erd- oder wasserberührten Stahlbetonkonstruktionen aller Art gegen drückendes Wasser, gegen Bodenfeuchtigkeit oder nicht drückendes Wasser einsetzbar ist.

Das Abdichtungselement umfasst eine Klebeschicht. Die Klebeschicht ist ein klebendes flächiges Gebilde und kann wasserquellbare Komponenten enthalten, die in Kontakt mit Wasser quellen und somit den abzudichtenden Raum vollständig ausfüllen.

Solche flächigen Abdichtungselemente können auf ein flächiges Trägermaterial, beispielsweise aus Metall, Kunststoff, Textil, Vlies, oder einer Folie, insbesondere einem Fugenblech oder einem Metallband, aufgebracht sein.

Üblicherweise ist die Klebeschicht auf der dem Trägermaterial gegenüberliegenden Seite mit einer Abdeckung versehen, um die Klebeschicht zu schützen und das Auf- und Abwickeln des flächigen Abdichtungselements zu ermöglichen, ohne dass der Anwender mit der Klebeschicht in Kontakt kommt. Vor der Ingebrauchnahme wird die Abdeckung entfernt, was einen zusätzlichen Arbeitsschritt erfordert und vor Ort Müll verursacht.

Aus dem Stand der Technik ist auch bekannt, dass ungeschützte freiliegende Klebeschichten solcher flächigen Abdichtungselemente bereits bei kurzzeitiger Außenbewitterung zur Oxidation neigen, wenn die Abdichtungsbahn mit nach außen gerichteten Klebemitteln in einer Verschalungssituation aufgebracht wird. Oxidierte Oberflächen haften an dem nachträglich gegossenen Beton nicht an und die freiliegende Klebemitteloberfläche neigt dazu, durch Witterungseinflüsse und Staub zu verschleißen.

Daher wurde versucht, ein wasserdichtes Abdichtungselement, das an einer Betonform vorapplizierbar ist, chemischen und physikalischen Veränderungen bei Außenbewitterung standhält und eine starke, voll haftende Anbindung an die nachträglich gegossene Betonstruktur ausbilden kann, bereitzustellen.

Die DE 692 13 507 T2 und die US 2005/0196590 A1 lehren ein wasserdichtes Abdichtungselement (Membran), das eine synthetische Klebeschicht und eine zusätzliche Schutzbeschichtung aufweist und auf ein flächiges Trägermaterial aufgebracht ist, wobei die Schutzbeschichtung im Gebrauch nicht entfernt wird. Die Schutzbeschichtung soll sehr wetterbeständig sein, chemischen und physikalischen Veränderungen während der Außenbewitterung standhalten, eine geringe Klebrigkeit aufweisen und das Klebemittel vor Staub, Schmutz und Witterungseinflüssen schützen. Die Schutzbeschichtung ist vorzugsweise aus Styrolbutylacrylat und wird als Dispersion auf die Klebeschicht aufgebracht.

Um die Schutzwirkung der Schutzbeschichtung weiter zu verbessern, wird in der DE 692 13 507 T2 und der US 2005/0196590 A1 vorgeschlagen, der Schutzschicht Lichtstabilisierungsmittel und Lichtabsorptionsmittel zuzusetzen.

Allerdings hat sich gezeigt, dass bei gegossenen Betonstrukturen, bei denen solche Abdichtungsmembranen eingesetzt wurden, nur eine ungenügende Haftung erzielt wird, der erhaltene Verbund unzureichend ist und daraus Wasserundichtigkeiten resultieren.

Die EP 2 885 361 B1 lehrt eine wasserdichte Membran mit einer Schottschicht und einer Funktionsschicht, die aus einer Klebeschicht und einer Schicht aus einem thermoplastischen Polymer aus der Gruppe der Polyvinylalkohole und Copolyester besteht.

Die Aufgabe der vorliegenden Erfindung besteht darin, die Betonhaftung und Wasserdichtigkeit von Abdichtungselementen weiter zur verbessern.

Diese Aufgabe wird durch die Merkmale des Anspruchs 1 gelöst.

Erstaunlicherweise wurde festgestellt, dass Abdichtungselemente mit verbesserter Haftung und Wasserdichtigkeit erhalten werden, wenn auf die Klebeschicht des Abdichtungselements eine Polyurethan oder Polyurethan-Copolymere umfassende Betonkontaktschicht aufgebracht ist, wobei die Betonkontaktschicht eine temporär stabile Schicht ist und die Bruchkraft der Betonkontaktschicht nach Lagerung in einer wässrigen 0,1 M NaHCO₃ über eine Zeitdauer von sieben Tagen bei 23 °C im Vergleich zu der Bruchkraft der Betonkontaktschicht ohne Lagerung wenigstens auf 20 %, vorzugsweise auf wenigstens 10 % und besonders bevorzugt auf wenigstens 5 % reduziert ist.

Die erfindungsgemäße Betonkontaktschicht ist eine nur vorübergehend beständige Schicht, die sich unter alkalischen Bedingungen sowie bei Erwärmung und/oder UV-Bestrahlung abbaut und im Gebrauch nicht entfernt wird. Im Gegensatz zu den aus dem Stand der Technik bekannten Schutzschichten ist die erfindungsgemäße Betonkontaktschicht gerade keine der Außenwitterung vollständig standhaltende Schutzschicht gegen Staub, Schmutz und Umwelteinflüsse.

Die Betonkontaktschicht umfasst Polyurethane, insbesondere Polyurethan-Polyether-Copolymere, vorzugsweise aus der Gruppe der anionischen, aliphatischen Polyurethan-Polyether-Copolymere. Zudem sind beispielsweise auch Polyurethan-Acrylat-Copolymere möglich. Die Polymerdispersionen sollten keine Vernetzer enthalten und die daraus gebildeten Schichten sollten nicht vernetzt sein, sodass sich die Betonkontaktschicht bei kurzzeitiger Benetzung zwar noch nicht auflöst, bei längerer Benetzung durch frischen alkalischen Beton jedoch klebrig wird, quillt und/oder sich auflöst.

Zur Erhöhung der Unbeständigkeit der Betonkontaktschicht kann die Betonkontaktschicht gemäß einer Variante zudem mechanisch geschwächt sein, beispielsweise durch gezieltes Einritzen, Bearbeiten mit einer Nadelwalze oder durch die Einarbeitung von "Sprengmitteln" in die Betonkontaktschicht, die sich in Kontakt mit Wasser aus der Betonkontaktschicht ablösen, abplatzen oder quellen und so einen besseren Zugang zu der Klebeschicht ermöglichen. Unter "Sprengmitteln" werden nicht reaktive Partikel, z. B. Metalloxider verstanden, die bei Quellung zu einem leichten Einreißverhalten in der Folie führen.

Die Schichtdicke der Betonkontaktschicht sollte gering sein und liegt etwa bei 0,010 bis 0,300 mm, vorzugsweise bei 0,015 bis 0,100 mm und besonders bevorzugt bei 0,020 bis 0,030 mm, insbesondere bei 0,025 mm.

Durch diese Maßnahmen wird der Zutritt von Wasser durch die Betonkontaktschicht zu der Klebeschicht, das Quellen der Klebeschicht und das dadurch bewirkte bessere Verkrallen/Haften am Beton verbessert, eine langfristig hohe Haftung und Verklebeverbundwirkung erreicht und damit eine etwaige Wasserumläufigkeit verhindert.

Im Rahmen der vorliegenden Erfindung wird gerade nicht der aus dem Stand der Technik bekannte Weg "Verbesserung der Schutzwirkung und Stabilität der Schutzschicht" eingeschlagen, sondern vielmehr die schützende Wirkung der auf der Klebeschicht vorgesehenen Schicht gezielt verschlechtert, wodurch unerwartet gute Ergebnisse erzielt werden konnten.

Die erfindungsgemäße Betonkontaktfolie sollte nicht durch Lichtstabilisierungsmittel, Lichtabsorptionsmittel oder Oxidationsschutzmittel stabilisiert sein.

Die auf der Klebstoffschicht befindliche Betonkontaktschicht sollte nicht klebrig sein, damit die Abdichtungsbahn aufgewickelt und einfach transportiert werden kann und Verklebungen zwischen den einzelnen Lagen des Produkts in der Verpackung vermieden werden.

Die Betonkontaktschicht kann durch Beschichten der Klebeschicht, beispielsweise mit einer wässrigen, nicht vernetzenden, aber filmbildenden Dispersion auf Polyurethanbasis, hergestellt werden.

In einer bevorzugten Ausführungsform wird die Betonkontaktschicht nicht flüssig auf die Klebeschicht aufgetragen, sondern vielmehr zunächst eine Folie aus dem Material der Betonkontaktschicht vorzugsweise auf einem flächigen Substrat, wie beispielsweise beschichtetem Papier, hergestellt und die Folie mit dem Substrat anschließend auf die Klebeschicht laminiert und das Substrat anschließend entfernt. Hierdurch können Dickenschwankungen in der Herstellung der Betonkontaktschicht minimiert werden. Zudem eignet sich dieses Verfahren auch zur Herstellung von Abdichtungselementen mit Betonkontaktfolien mit einer konstanten, sehr geringen Schichtdicke von beispielsweise 0,025 mm. Zudem ist bei dieser Verfahrensführung ein Scale-up auf einfache Weise möglich.

Ein weiterer Vorteil der Betonkontaktschicht auf Basis von Polyurethan ist deren leichte Dehnbarkeit, so dass das Abdichtungselement auch sehr gut für gebogene Trägermaterialien geeignet ist.

Ein weiterer Vorteil der Betonkontaktschicht auf Basis von Polyurethanen ist, dass diese als transparente oder transluzente Polymerschicht ausgebildet sein kann. Hierdurch können, sofern die unter der Betonkontaktschicht befindliche Klebeschicht ebenfalls transparent ist, Fehlstellen auf der der Betonkontaktschicht abgewandten Seite der Klebeschicht erkannt und eventuelle fehlerhaft verklebte Stellen zum Abdichtungselement sichtbar gemacht werden.

Weiterhin ist die Betonkontaktfolie auf der Basis von Polyurethan im Wesentlichen kaltwasserstabil, so dass sie sich nicht beim ersten Regen auflöst. Somit ist ein Einsatz auf der Baustelle ohne zusätzliche Arbeitsschritte möglich.

Die Klebeschicht ist dehnbar und kann aus unterschiedlichen Polymeren hergestellt sein, beispielsweise auf der Basis von Polyacrylaten, Polyalkylacrylaten, Acrylatcopolymeren, Carbonsäure-Acrylester-Copolymeren, Styrolcopolymeren, Butadien-Styrol-Copolymeren, Butylkautschuk, Polyisobutylen, Vinylethern, Styrol-Isopren-Stryrol oder Styrol-Ethylen-Butylen-Styrol. Vorzugsweise sind die Klebeschichten auf Basis von Polyacrylat, insbesondere Polyacrylat-Polyalkylacrylat-Copolymeren oder Polyacrylsäure-Polyalkylacrylsäureester-Copolymeren ausgebildet.

Die Klebeschicht kann wasserquellbare Komponenten umfassen, die aus der Gruppe der Polyacrylamide, der Acrylamid umfassenden Copolymere, der Acrylsäure umfassenden Copolymere, der carboxygruppenreichen Polymere, der Acrylamid/Acrylsäure-Copolymere, der granulären superabsorbierenden Polymere, der Bentonite oder Metallhydroxide ausgewählt werden.

Geeignete Klebeschichten sind beispielsweise in der EP 3 178 894 beschrieben.

Es kommt vor, dass innerhalb der abzudichtenden Beton-Arbeitsfuge aufgrund von Setzungen, mechanischen Belastungen, Temperaturschwankungen etc. Bewegungen entstehen, die primär als Scherkräfte auf die Fugenblechbeschichtung, also die Klebeschicht, wirken. Die Verbundwirkung zwischen Klebeschicht und Beton kann nur aufrechterhalten werden, wenn trotz dieser potentiellen Bewegungen kein Abriss zwischen Klebeschicht und Beton erfolgt. Dies kann dadurch sichergestellt werden, dass die Klebeschicht auch als Dehnungselement fungiert, d.h. die Scherkräfte abpuffert bzw. aufnimmt. Die Klebeschicht wirkt somit ebenfalls als "Dehnungselement".

Um die erwünschte Dehnbarkeit zu erreichen, sollte das Polyacrylat viskoelastische Eigenschaften besitzen und gleichzeitig eine ausreichende Kohäsion aufweisen.

Die Trägerschicht kann eine Schicht aus Metall wie ein Blechstreifen bzw. Spaltband, insbesondere aus kaltgewalztem Stahl, Schwarzblech, verzinktem Blech oder Edelstahl, eine Polymerschicht, beispielsweise aus thermoplastischem Material in Form einer gewebten oder nicht gewebten kontinuierlichen Folie, beispielsweise ausgewählt aus Polyethylen (HDPE), Polyethylenterephthalat (PET), Polystyrol (PS), Polypropylen (PP), Polyvinylchlorid (PVC), Polyamid (PA) oder deren Kombination, ein starrer Kunststoffträger, ein Textil, Vlies, Pappe oder Papier sein.

In einer bevorzugten Ausführungsform ist die Trägerschicht bandförmig, insbesondere ein verzinktes Metallband, vorzugsweise mit einer Breite zwischen 50 mm und 200 mm, oder ein Fugenblech, vorzugsweise mit einer Breite 140 mm.

Gemäß einer weiteren Ausführungsform kann das Abdichtungselement auch eine größere Breite aufweisen und als vollflächiges Abdichtungselement, vorzugsweise auf einem Textilträger oder Vliesträger, verlegt werden.

Eine bevorzugte Ausführungsform des erfindungsgemäßen Abdichtungselements ist ein mit einer Betonkontaktfolie der Schichtdicke 0,025 mm aus Polyurethanpolyethercopolymer beschichteter Klebestreifen der Schichtdicke 0,1 bis 5,0 mm auf Basis von Polyacrylat, insbesondere 0,5 bis 1,0 mm, der auf ein verzinktes Metallband mit einer Breite von 140 mm und einer Dicke von 0,5 mm aufgeklebt ist. Das Abdichtungselement kann aufgewickelt als Rolle bereitstellt werden, wobei die Oberseite der nicht klebenden Betonkontaktschicht aufgerollt auf der Unterseite des Metallbandes anliegt.

Nach dem Abrollen wird das Abdichtungselement mit der Betonkontaktfolie als Außenseite an der gewünschten Stelle befestigt. Dies ist einfach möglich, da die Betonkontaktfolie nicht klebrig ist und auch keine zusätzlichen Abdeckungen entfernt werden müssen. Anschließend oder auch eine geraume Zeit später wird der flüssige Beton gegen die Betonkontaktfolie gegossen. Je nach Außenbewitterung kann die Betonkontaktfolie zu diesem Zeitpunkt bereits (teilweise) anquellen. Spätestens durch den Kontakt mit dem alkalischen, flüssigen Beton wird die Betonkontaktfolie zunehmend aufgelöst und verliert ihre Schutzwirkung, so dass der flüssige Beton in Kontakt mit der Klebeschicht gelangt und dort haftet. Die daraus resultierende Haftzugfestigkeit zwischen dem Abdichtungselement und dem Beton beträgt mindestens 0,5 MPa und die daraus resultierende Wasserdichtigkeit beträgt trotz einer Arbeitsfugenaufweitung von 1,0 mm 5,0 bar.

Nachfolgend wird die Erfindung anhand von Ausführungsbeispielen und Vergleichsversuchen näher beschrieben.

Es zeigen:
- **Figur 1:**: einen Schnitt durch ein Abdichtungselement 10, das auf einer Trägerschicht 15 aufgebracht ist,
- **Figur 2:**: eine Skizze des Versuchs zur Messung der Bruchkraft und Reißdehnung, und
- **Figur 3:**: die Versuchsergebnisse der Messung der Bruchkraft und Reißdehnung.

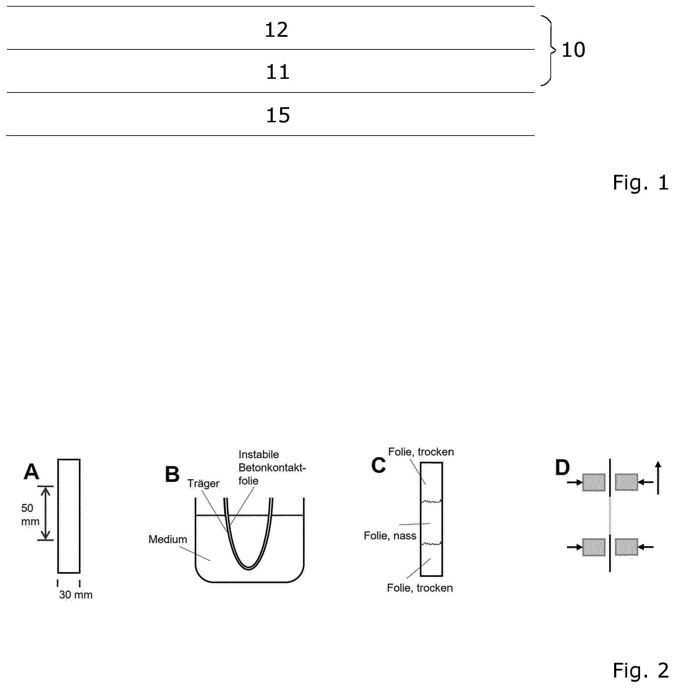

Das Abdichtungselement 10 in **Figur 1** ist flächig und umfasst eine Klebeschicht 11, die mit der Betonkontaktfolie 12 abgedeckt ist. Auf die der Betonkontaktfolie 12 gegenüberliegenden Seite der Klebeschicht 11 ist eine Trägerschicht 15, die vorzugsweise ein Blechstreifen ist, aufgeklebt.

### Ausführungsbeispiele:

### 1. Herstellen der Abdichtungsbahn durch Lamination

a. Eine wässrige Dispersion aus Polyurethanen oder Copolymeren von Polyurethanen und Polyethern wird auf die glatte Oberfläche eines polyethylenbeschichteten Papiers aufgebracht und die Schichtdicke so eingestellt, dass sie nach Trocknung 0,025 mm ergibt. Der getrocknete Film wird zusammen mit dem Papier aufgerollt. Anschließend wird ein kohäsives Klebeband auf Basis von Polyacrylat bereitgestellt. Der getrocknete PU-Film wird auf die Oberfläche des Klebebands laminiert. Anschließend wird das PE-beschichtete Papier entfernt und die mit der PU-Betonkontaktfolie beschichtete Polyacrylatklebeschicht aufgerollt. Die Oberfläche der PU-Betonkontaktfolie ist nicht klebrig.
   Bei der Herstellung der Polyurethanpolyethercopolymerdispersion kann durch den jeweiligen Anteil an Polyether die gewünschte Hydrophobie eingestellt werden.
b. In einer Variante ist die Oberfläche des PE-beschichteten Papiers oder eines anderen zur Beschichtung geeigneten Trägers nicht glatt, sondern strukturiert, beispielsweise in Form von Wellen- oder Berg-Tal-Strukturen, Einkerbungen o.ä., so dass die Schichtdicke der getrockneten PU-Schicht innerhalb der Struktur variiert. Auf diese Weise ist eine einfache und kostengünstige Herstellung der Betonkontaktfolie mit definierten Schwächungen möglich.
c. In einer weiteren Variante weist die wässrige Polyurethandispersion Additive, insbesondere inerte Partikel geringer Korngröße, wie beispielsweise Sand, auf. Diese wirken in der getrockneten Betonkontaktfolie als Sprengmittel, da der Film an diesen Partikeln beim Quellen reißt.

### 2. Herstellen der Abdichtungsbahn durch Beschichten

Alternativ zu 1. kann die wässrige Polyurethan- oder Polyurethan-Polyether-Dispersion ggf. mit den Additiven gemäß 1.c. auch direkt auf die Oberfläche der Klebeschicht aufgebracht und getrocknet werden.

### 3. Versuche zur Bruchkraft

Um im Rahmen der vorliegenden Erfindung die nur temporäre Stabilität der Betonkontaktschicht, d.h. die nur vorübergehende und sich zunehmend verschlechternde schützende Wirkung der Betonkontaktfolie zu quantifizieren, wurde die Betonkontaktfolie unter alkalischen Bedingungen bei 23 °C gelagert und die Bruchkraft der Betonkontaktschicht der nicht gelagerten und der gelagerten Betonkontaktfolie bestimmt, wobei als Maß für die nur temporäre Stabilität der Betonkontaktfolie der prozentuale Anteil der nach Lagerung gemessenen, verbleibenden Bruchkraft zu der Bruchkraft der ursprünglichen Betonkontaktfolie herangezogen wurde. Es ist anzumerken, dass die gewählten Versuchsbedingungen vergleichsweise milde Bedingungen sind und die Betonkontaktschicht unter realen weitaus alkalischeren Bedingungen auf einer Baustelle eine noch geringere Stabilität aufweisen wird.

Grundsätzlich gilt, dass die Bruchkraft einer solchen Folie mit zunehmender Instabilität abnimmt, d.h. dass sich das Kraftniveau beim Anriss desto stärker verringert, je stärker das Maß der Instabilität fortgeschritten ist.

Die Versuchsdurchführung ist schematisch in **Figur 2** dargestellt. Zur Untersuchung der Bruchkraft der Betonkontaktfolie (BKF) wurden jeweils Streifen der Betonkontaktfolie mit dem PE-Papier-Träger über dem jeweiligen Lagerungsmedium in einem schlaufenförmigen Träger fixiert und der Träger mit der Betonkontaktfolie über eine Länge von ca. 50 mm der Betonkontaktfolie in das jeweilige Lagerungsmedium über eine Zeitdauer von sieben Tagen bei 23 °C eingetaucht, vgl. Figur 2 A, B. Die Streifen waren 30 mm breit und ca. 150 mm lang und die Betonkontaktfolie zeigte eine Schichtdicke von 0,025 mm.

Anschließend wurden die Streifen aus dem Lagerungsmedium entnommen, ohne weitere Rekonditionierung von dem Träger befreit und mittels einer Zugprüfmaschine vermessen (Probenbreite: 30 mm, Einspannlänge: 50 mm, Maschinengeschwindigkeit v = 300 mm/min, Probenmenge n = 15), vgl. Figur 2 A, C, D.

Die Proben waren bei der Messung mittig mit Lagerungsmedium gequollen und wurden an den Außenseiten zur besseren Vermessbarkeit trocken gehalten, vgl. Figur 2 C.

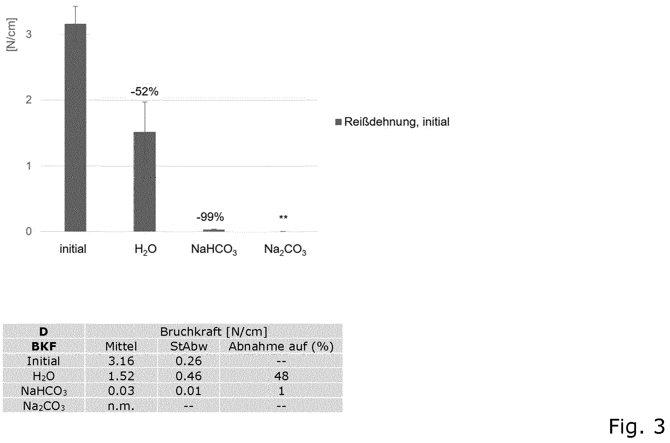

In **Figur 3** ist die nach 15 Messungen gemittelte Bruchkraft der Betonkontaktfolie (BKF) [N/cm] ohne Lagerung (initial) und nach siebentägiger Lagerung in H₂O, 0,1 M wässriger NaHCO₃ und 0,1 M wässriger Na₂CO₃ bei 23 °C aufgeführt, die Standardabweichung sowie die Reduzierung der Bruchkraft im Vergleich zu der nicht in einem Lagerungsmedium gelagerten Betonkontaktfolie.

Selbst unter den milden Bedingungen einer 0,1 M NaHCO₃ verringert sich die Bruchkraft der Betonkontaktfolie nach siebentägiger Lagerung um ca. 99 % auf 1 % des Ursprungsniveaus, bei der in Na₂CO₃-Lösung gelagerten Betonkontaktfolie war die Bestimmung der Bruchkraft aufgrund von der stark verringerten mechanischen Belastbarkeit der Betonkontaktfolie nicht möglich. Bei dem Versuch, den PE-Papier-Träger zu entfernen, wurde die Betonkontaktfolie gerissen, sodass eine Vermessung nicht möglich war. Bei Lagerung in Wasser wurde bereits eine Verringerung der Bruchkraft auf ca. 50 % bestimmt.

Die Sollbruchstelle war an den vermessenen Proben an der befeuchteten Stelle.

Die bei den Reißdehnungsversuchen vorliegenden Messbedingungen waren alle weitaus milder als die Realbedingungen auf einer Baustelle. Dennoch belegen selbst diese milden Bedingungen, dass die erfindungsgemäße Betonkontaktfolie bereits unter schwach alkalischen Bedingungen instabil wird und zu der im nachfolgenden Versuch beschriebenen, hervorragenden Dichtigkeit beiträgt.

### 4. Untersuchungsergebnisse zur Abdichtung von Arbeits- und Sollrissfugen im Ortbeton gegen drückendes und nicht drückendes Wasser und gegen Bodenfeuchtigkeit

Die Untersuchungen wurden mit einem verzinkten Stahlblech, das auf einer Seite mit einer Klebeschicht beschichtet war, wobei auf die Klebeschicht eine Betonkontaktfolie aus einem nicht vernetzenden Polyurethan-Polyether-Copolymer aufgebracht war (nachfolgend "Fugenblech", 140 mm x 1,2 mm (Höhe x Dicke)), durchgeführt.

Die reine Blechdicke betrug 0,5 mm, die Klebeschicht zeigte eine Schichtdicke von 0,7 mm und die hierauf laminierte Betonkontaktfolie war 0,025 mm dick.

### 5. Dichtigkeitsuntersuchung an dem aus wasserundurchlässigem Beton (WU-Beton der Güte C 30/37) hergestellten Versuchskörper:

Das Fugenblech wurde in der Mitte der 30 cm breiten Fuge zwischen den Betonbauteilen eingebaut, die Befestigung erfolgte an der Bewehrung mit einseitig aufklebbaren Befestigungsbügeln, die Stoßbereiche wurden stumpf gestoßen und mit einseitig aufklebbaren Befestigungsblechen fixiert, die minimale Einbindetiefe in den ersten Betonierabschnitt betrug 30 mm.

Nach dem Aushärten des Betons wurde die Arbeitsfuge aufgeweitet, fixiert und mit Wasserdruck beaufschlagt. Das Aufweiten erfolgte auf 0,25 mm, 0,5 mm und final auf 1,0 mm. Der Wasserdruck wurde in Stufen von 0,2 bar mit Verweilzeiten von 24 Stunden auf 1 bar erhöht und anschließend in Stufen von 1 bar mit Verweilzeiten von 24 Stunden auf 5 bar und für 28 Tage konstant gehalten. Selbst bei dem Druck von 5,0 bar und einer auf 1,0 mm aufgeweiteten Arbeitsfuge war das Prüfergebnis "dicht".

### 6. Hafteigenschaften der Klebebeschichtung mit Betonkontaktfolie auf dem Blech und Beton

Der Haftzugwert des Fugenblechs lag bei einer Lagerung in Normklima 23/50-2 bei 0,59 MPa (100 % Adhäsionsversagen zwischen Beschichtung und Beton) und bei Normklima 23/50-2 + 70 °C bei 0,75 MPa. Dies belegt, dass das erfindungsgemäße Abdichtungselement auch als Dehnungselement wirkt, wie zuvor beschrieben.

Im Vergleich dazu wurden bei einem herkömmlichen mit einem mit der gleichen Klebeschicht beschichteten Zinkblech, wobei die Klebeschicht mit einer Schutzfolie abgedeckt war und vor dem Versuch entfernt wurde, nur eine Haftzugfestigkeit von 0,31 MPa bzw. 0,35 MPa erreicht.

## Patentansprüche

1. Abdichtungselement (10) zur Bauwerksabdichtung, umfassend eine dehnbare Klebeschicht (11), **dadurch gekennzeichnet, dass** auf der Klebeschicht (11) eine Betonkontaktschicht (12) umfassend Polyurethane oder Polyurethan-Copolymere aufgebracht ist, wobei die Betonkontaktschicht (12) eine temporär stabile Schicht ist und die Bruchkraft der Betonkontaktschicht (12) nach Lagerung in einer wässrigen 0,1 M NaHCO₃-Lösung über eine Zeitdauer von sieben Tagen bei 23 °C wenigstens auf 20 %, vorzugsweise wenigstens auf 10 % und besonders bevorzugt wenigstens auf 5 % im Vergleich zu der Bruchkraft der Betonkontaktschicht ohne Lagerung reduziert ist.

2. Abdichtungselement (10) nach Anspruch 1, **dadurch gekennzeichnet, dass** die Polyurethane oder Polyurethan-Copolymere nicht zusätzlich vernetzt sind und/oder die Dispersion zur Herstellung der Polyurethane oder Polyurethan-Copolymere filmbildend ist und/oder keine Vernetzer enthält.

3. Abdichtungselement (10) nach einem der vorangegangenen Ansprüche, **dadurch gekennzeichnet, dass** die Schichtdicke der Betonkontaktschicht (12) zwischen 0,010 mm und 0,300 mm, vorzugsweise zwischen 0,015 und 0,100 mm und besonders bevorzugt zwischen 0,020 bis 0,030 mm, insbesondere 0,025 mm, beträgt.

4. Abdichtungselement (10) nach einem der vorangegangenen Ansprüche, **dadurch gekennzeichnet, dass** die Betonkontaktschicht (12) geschwächt ist.

5. Abdichtungselement (10) nach Anspruch 4, **dadurch gekennzeichnet, dass** die Schwächung der Betonkontaktschicht (12) mittels Einritzen, mittels einer Nadelwalze oder durch in der Betonkontaktschicht eingebettete Sprengmittel erfolgt.

6. Abdichtungselement (10) nach einem der vorangegangenen Ansprüche, **dadurch gekennzeichnet, dass** die Betonkontaktschicht (12) nicht durch Lichtstabilisierungsmittel, Lichtabsorptionsmittel und/oder Oxidationsschutzmittel stabilisiert ist.

7. Abdichtungselement (10) nach einem der vorangegangenen Ansprüche, **dadurch gekennzeichnet, dass** die Klebeschicht (11) Polymere aus der Gruppe Polyacrylat, Polyalkylacrylate, Acrylatcopolymere, Carboxylsäure-Acrylester-Copolymere , Styrolcopolymere, Butadien-Styrol-Copolymeren, Butylkautschuk, Polyisobutylen, Vinylethern, Styrol-Isopren-Stryrole und/oder Styrol-Ethylen-Butylen-Styrol umfasst, und vorzugsweise aus Polyacrylat, insbesonder Polyacrylat-Polyalkylacrylat-Copolymere oder Polyacrylsäure-Polyalkylacrylsäureester-Copolymere ist und/oder eine wasserquellbare Komponente aus der Gruppe der Polyacrylamide, der Acrylamid umfassenden Copolymere, der Acrylsäure umfassenden Copolymere, der carboxygruppenreichen Polymere der Acrylamid/Acrylsäure-Copolymere, der granulären superabsorbierenden Polymere, der Bentonite oder Metallhydroxide aufweist.

8. Abdichtungselement (10) nach einem der vorangegangenen Ansprüche, **dadurch gekennzeichnet, dass** die Schichtdicke der Klebeschicht (11) zwischen 0,1 und 5,0 mm, vorzugsweise zwischen 0,4 und 2,0 mm und besonders bevorzugt zwischen 0,5 und 1,0 mm beträgt.

9. Abdichtungselement (10) nach einem der vorangegangen Ansprüche, **dadurch gekennzeichnet, dass** das Abdichtungselement (10) auf eine Trägerschicht (15) aufgebracht ist.

10. Abdichtungselement nach Anspruch 9, **dadurch gekennzeichnet, dass** die Trägerschicht (15) eine Metallschicht, vorzugsweise ein Metallband, eine Polymerschicht, vorzugsweise aus thermoplastischem Material in Form einer gewebten oder nicht-gewebten kontinuierlichen Folie, beispielsweise ausgewählt aus Polyethylen (HDPE), Polyethylenterephthalat (PET), Polystyrol, Polypropylen, PVC, Polyamid oder deren Kombination, ein starrer Kunststoffträger, ein Textil, Vlies, Pappe oder Papier ist.

11. Verfahren zur Herstellung eines Abdichtungselements (10) nach einem der Ansprüche 1 bis 10, **dadurch gekennzeichnet, dass** die Klebeschicht (11) zur Herstellung der Betonkontaktschicht (12) mit einer wässrigen Polymerdispersion beschichtet wird oder eine Folie aus dem Material der Betonkontaktschicht auf einem flächigen Substrat, wie beschichtetem Papier, hergestellt, die Folie mit dem flächigen Substrat anschließend auf die Klebeschicht laminiert und das flächige Substrat abgezogen wird.

12. Verwendung eines Abdichtungselements nach einem der vorangegangenen Ansprüche 1 bis 10 zum Abdichten von Arbeits- und Sollrissfugen im Ortbeton gegen drückendes Wasser und gegen Bodenfeuchtigkeit.
